# EUROPEAN PATENT APPLICATION

(11) **EP 1 118 299 A1**
(43) Date of publication of application: **25.07.2001**
(21) Application number: 01850010.8
(22) Date of filing: 16.01.2001
(51) Int. Cl.: A47J 43/18, A47J 37/04

(54) **Holder for skewers**

(30) Priority: 19.01.2000 SE 0000144
(71) Applicant: Johansson, Per, 612 34 Finspang (SE); Molnar, Anton, 612 34 Finspang (SE)
(72) Inventor: Johansson, Per, 612 34 Finspang (SE); Molnar, Anton, 612 34 Finspang (SE)
(74) Representative: Berglund, Erik Wilhelm

(57) **Abstract**

Holder (1) for skewers, which holder is constituted of a cylindrical body (3) that has a flat bottom and eight holes (4) for the insertion of skewers (2) arranged spaced around the body (3) a distance up on this. The holes are radial apart from being inclined 5° inwards downwards. Integrated with the body a shaft (5) extends upwards and in the upper end of this a knob (6) is arranged for the gripping and transferring of the holder to and from a grill with the tip of the skewers inserted into the holes.

## Description

At the grilling of pieces of meet and vegetables arranged on a skewer these are normally placed on a grill grid and are turned and moved successively in the same way as pieces of meat, then to be lifted away from the grill and served when they are ready. The handling is comparatively circumstantial and time consuming and it is furthermore easy to drop the skewers or that the pieces of food threaded on these fall off. The handling is unrational and unpractical, in particular if skewers for several persons are to be grilled at the same time. The result is easily that one avoids serving skewers.

In view of the above problem the invention has as its object to eliminate the difficulties at skewers and enable simple and rational handling of skewers in the connection with grilling. In accordance with the invention this problem is solved with a holder for skewers that include means that can hold the skewers in their tips. For instance these means may be constituted by holes in a solid body or two close to each other arranged panels. Alternatively the means may be constituted by panel edges, one that holds the tip down and one that holds the skewer up a distance from the tip. Possibly one can consider that the holder for the skewers before the use is mounted fast to the grill grid.

In a preferable further development of the inventive thought the holder for the skewers is symmetric so that skewers may be mounted in opposing directions. This also brings the advantage that the holder does not have to be mounted fast to the grill grid but by arranging the skewers symmetrically in the holder the skewers may balance each other even if the holder is not that heavy. In this way it also becomes possible to move the entire holder with inserted skewers from the place where the skewers are prepared to the grille and then further on to the place where they are served.

On can furthermore consider designing the holder so that it has over its circumference distributed holes for the tips of the skewers. The holder is preferably comparatively heavy and compact so that it does not shielded off the heat from the grille. The holder is intended to be placed on the grill grid and it is therefor suggested that it is flat on the bottom side. Preferably the grill holder is rotationally symmetric and provided with a lifting knob, hook or the like in the upper end for the transfer to and from the grill. In order to reduce the risk that the skewers fall out from the drilled holes these are further suggested to be inclined somewhat downwards inwards, for instance 5° so that the skewers are somewhat lifted in there outer ends.

In should be noted that the holder of the skewers in the symmetrical case does not have to be so heavy that it independent of the placing of the skewers with meat and the like on these can not tilt but it is actually sufficient that it can coop with one single skewer without tilting, this since additional skewers may be placed more or less symmetrically balancing each other. Advantageously the number of holes for receiving skewers is therefor even.

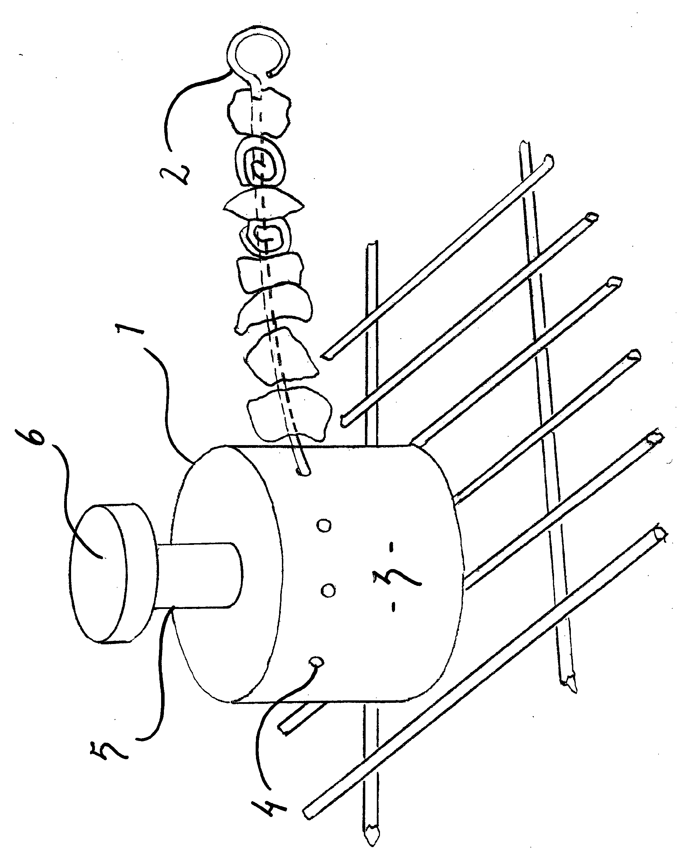

Additional advantages and characteristics of the invention are apparent from the following description of a preferred embodiment of the invention described with reference to the enclosed drawing.

The holder 1 for skewers 2 shown in the drawing is primarily constituted of a cylindric body 3 with a flat bottom side. In the upper end the cylindrical body is provided with a shaft 5 and knob 6 for gripping centered in relation to the cylindrical body 3. A short distance up on the cylindrical body essentially radial holes 4 are arranged evenly spaced over the circumference of the body. In the shown case the number of holes is 8. The holes are not exactly radial but are inclined inwards downwards with an angle of ca 5°. Since the holes are slightly larger in diameter than the tips of the skewers it is easy to insert these at the same time as the edge of the hole due to the inclination will give a good retaining grip on the skewer. Due to the food on the skewers these flex slightly under the load so that the skewers become essentially horizontal at the same time as they are well held by the inclined holes.

At the use of the holder of skewers according to the invention the number of skewers that are to be prepared are successively inserted with their tips in the holes in a symmetrical and balanced way. With this is meant that after the inserting of a first skewer into a first hole the next one is inserted into an opposed hole so that the two skewers balance each other. Then the remaining skewers are mounted in pairs balancing each other until the desired number of skewers have been mounted in the holder. Since the holder can hold at least one unbalanced skewer the number of skewers need not to be even, in order however to obtain a good even grilling result a comparatively even spacing over the circumference is good. This mounting of the skewers can preferable take place somewhere else than on the grill, for instance the sink, to start with this will be more simple and more adapted to the handling of the raw materials and secondly the skewers will become more evenly grilled and if an accident happen during the mounting in the holder no skewer falls down and become grilled or burned fast to the grill.

When then grilling is to take place the holder is held by the knob and lifted over to the grill. Since a grill rarely has its coal or the heat generated by these exactly uniformly distributed over the surfaces more heat will be delivered at some places and the skewers there would become ready quicker. Since the holder is flat on its bottom side it may together with the skewers easily be rotated by the holding of two outer ends of opposed located skewers. In this way skewers and the holder may also be moved laterally end depthwise in relation to the grill in order to obtain a uniform heating of the skewers that also separately easily may be turned in the holes around their own length axis in order to achieve an even grilling from all directions of the skewers. Advantageously the skewers have a quadratic cross section, on the one hand preventing the food from turning, on the other hand preventing the skewers from turning in the holes of the holder. When the grilling is through preferably the entire holder with the skewers is moved to a plate on the dinner table and the skewers can be served at which however the removal of the skewers is done on alternating sides so that the balance is retained and the holder does not tilt.

When a more free choice at the removal of the ready skewers from the holder is desired one can consider this having a central hole from below and that the holder is placed on the special plate provided with a correspondingly extending pin. The skewers may alternatively be removed one by one and placed on a common plate for serving, at which they retain their temperature longer. As is apparent from the above the handling of the skewers by means of the invention is very simple and rational and at the same time the precision in the handling and the quality is increased considerably.

In the depicted case the holder of the skewers, that is the cylindrical body as well as shaft and knob is milled in one piece. Due to the shaft the heat transport from the cylindrical part out into the knob is comparatively restricted, in particular if this is of iron and the knob is therefor not as hot as the part that is closest to the grill. For the sake of safety however a grill glove should be used. As an alternative to this embodiment one can also consider that the shaft of the knob is constituted by a ceramic part that with a central screw is held in place on the cylindrical body. This lowers further the temperature of the knob if this should be considered desirable from a handling point of view.

As an alternative or complement to a lifting knob one can consider that the device in its upper end is provided with an ear for the lifting by means of a hook or the like, that for instance can be gripped by means of a hook provided handle or the like. The ear may also allow the hanging of the holder over an open fire in the nature.

Instead of gripping the holder for skewers by a knob or hook at transport one may instead grip a number of skewers in the outer ends of these, at which no knob is needed.

By instead of using downwards inclined holes use horizontal holes, that may possibly be arranged somewhat higher an even grilling may be achieved even if the grill is somewhat hotter in the middle due to the skewers hanging down somewhat in the periphery. The holder may of course be provided both with a row of inclined holes and a row of horizontal holes or with several rows of holes.

## Claims

1. Holder (1) for skewers (2), **characterized in** that it includes a number of means (4) for the holding of the tips of skewers in an essentially horizontal position.

2. Holder according to claim (1), **characterized in** that the holder (1) has a flat bottom support surface.

3. Holder according to claim 1 or 2, **characterized in** that the holder is symmetric so that the weights of the held skewers can balance each other and the holder be made lighter.

4. Holder according to claim 1, 2 or 3, **characterized in** that it has sufficient weight and bottom area not to tilt if only one skewer with food is placed on it.

5. Holder according to any of the preceding claims, **characterized in** that the means for the retaining of the tips, for instance holes (4) are somewhat inclined inwards downwards, for instance 5°.

6. Holder according to any of the preceding claims, **characterized in** that it is solid, for instance of iron.

7. Holder according to any of the preceding claims, **characterized in** that in its upper end is provided with a knob or hook, possibly on a shaft.

8. Holder according to any of the preceding claims, **characterized in** that it is rotationally symmetric, in particular cylindric.

9. Holder according to any preceding claims, **characterized in** that it has an even number of holes.

10. Holder according to any of the preceding claims, **characterized in** that it is in one piece.
